(19) **Europäisches Patentamt**

**European Patent Office**

**Office européen des brevets**

(11) **EP 0 838 035 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.$^7$: **G01P 3/46**

(21) Anmeldenummer: **96913466.7**

(22) Anmeldetag: **04.05.1996**

(86) Internationale Anmeldenummer:
**PCT/DE96/00778**

(87) Internationale Veröffentlichungsnummer:
**WO 97/003364 (30.01.1997 Gazette 1997/06)**

(54) **VERFAHREN UND SCHALTUNGSANORDNUNG ZUM ERMITTELN DER DREHZAHL EINES GLEICHSTROMMOTORS**

PROCESS AND CIRCUIT ARRANGEMENT FOR DETERMINING THE SPEED OF A D.C. MOTOR

PROCEDE ET CIRCUIT POUR LA DETERMINATION DE LA VITESSE DE ROTATION D'UN MOTEUR A COURANT CONTINU

(84) Benannte Vertragsstaaten:
**DE ES FR GB IT SE**

(30) Priorität: **08.07.1995 DE 19524913**

(43) Veröffentlichungstag der Anmeldung:
**29.04.1998 Patentblatt 1998/18**

(73) Patentinhaber: **ROBERT BOSCH GMBH**
**70442 Stuttgart (DE)**

(72) Erfinder:
• **KESSLER, Martin**
**D-77815 Bühl (DE)**
• **PREIS, Karl-Heinrich**
**D-77830 Bühlertal (DE)**

(56) Entgegenhaltungen:
WO-A-93/23904      DE-A- 3 328 250
FR-A- 2 086 374      GB-A- 2 162 707

**Beschreibung**

Die Erfindung betrifft ein Verfahren zum Ermitteln der Drehzahl eines Gleichstrommotors gemäß Anspruch 1 und eine Schaltungsanordnung zur Durchführung des Verfahrens gemäß Anspruch 7.

Stand der Technik

Es ist bekannt, Gleichstrommotoren in vielen Anwendungsfällen einzusetzen, bei denen der aktuellen Drehzahl beziehungsweise einer Drehzahlregelung des Gleichstrommotors eine besondere Bedeutung zukommt. So werden Gleichstrommotoren beispielsweise als Stellmotoren in Kraftfahrzeugen, beispielsweise für eine Sitzverstellung, für Fensterheber, für Hub- und Schiebedächer, Lüfter, Gebläse, Scheibenwischer usw. eingesetzt. Zur Ermittlung der Drehzahl der Gleichstrommotoren ist es bekannt, diesen einen Drehzahlsensor zuzuordnen, mittels dem die Drehbewegung einer Ankerwelle des Gleichstrommotors detektiert wird. Ein von dem Drehzahlsensor der Drehzahl proportionales Messsignal kann dann weiterverarbeitet werden. Aus der DE-OS 42 16 040 ist beispielsweise bekannt, ein derart ermitteltes, der Drehzahl proportionales Messsignal für die Überwachung eines Gleichstrommotors auf thermische Überlastung einzusetzen. Hierbei ist jedoch nachteilig, dass durch die Anordnung des zusätzlichen Drehzahlsensors sich der Aufbau der Gleichstrommotoren verkompliziert.

Aus der allgemeinen Elektrotechnik ist bekannt, dass die Drehzahl eines Gleichstrommotors der während des Betriebes des Gleichstrommotors in dessen Anker induzierten Quellenspannung proportional ist. Aufgrund einer Temperaturabhängigkeit des magnetischen Flusses kommt es zu einem Fehler beim Übergang von induzierter Quellenspannung/Drehzahl des Gleichstrommotors. Weitere tatsächlich auftretende aktuelle Betriebszustände des Gleichstrommotors, wie beispielsweise schwankende Versorgungsspannung, ein sich änderndes Lastmoment führen zu einer Verfälschung der Ermittlung der induzierten Quellenspannung. Insgesamt kommt es zu einer unkorrekten Ermittlung der tatsächlichen Drehzahl des Gleichstrommotors.

Aus Elektronik 1 vom 13. Januar 1994, Seite 40 bis 41, ist es bekannt, eine Drehzahlregelung eines Gleichstrommotors durchzuführen. Hierbei wird die aktuelle Drehzahl des Gleichstrommotors mittels einer der Drehzahl proportionalen Generatorspannung, also ohne einen Drehzahlsensor, gemessen.

Aus der DE 33 28 250 A1 ist eine Drehzahlregeleinrichtung für einen Gleichstrommotor bekannt, bei der eine Temperaturabhängigkeit kompensiert wird. Hierzu wird eine spezielle Brückenschaltung aufgebaut, wobei zur Verringerung der Temperaturabhängigkeit einer Drehzahlmessung mittels einer Drehzahlmesseinrichtung ein temperaturabhängiger Widerstand in bestimmter Art und Weise in die Brückenschaltung geschaltet wird, der den gleichen Temperaturkoeffizienten wie das Äquivalent der Widerstand des Motors, allerdings mit entgegengesetzten Vorzeichen, aufweist.

Aus der GB 2 162 707 ist eine Drehzahlmesseinrichtung bekannt, bei der ein Tachometer für eine Drehzahlerfassung benutzt wird. Somit ist hier eine zusätzliche die Drehzahl direkt messende Einrichtung erforderlich.

Vorteile der Erfindung

Das erfindungsgemäße Verfahren mit den im Anspruch 1 genannten Merkmalen bietet den Vorteil, dass eine korrekte Ermittlung der aktuellen Drehzahl möglich ist. Dadurch, dass im aktuellen Betriebszustand des Gleichstrommotors

   (a) ein Messglied ein der Klemmspannung entsprechendes Messsignal liefert,

   (b) ein Messglied ein dem Ankerstrom entsprechendes Messsignal liefert,

   (c) ein Temperatursensor ein der Ankertemperatur entsprechendes Messsignal liefert und

   (d) in einer Korrekturschaltung ausgehend von den Messsignalen des aktuellen Betriebszustands eine Drehzahl ermittelt wird, wobei die Temperaturabhängigkeiten der induzierten Ankerspannung und des Ankerwiderstands sowie der Bürstenspannungseffekt des Gleichstrommotors (10) kompensiert werden,

wird es sehr vorteilhaft möglich, eine Temperaturabhängigkeit bestimmter Motordaten zu berücksichtigen, indem die aufgrund der Temperaturabhängigkeit auftretende Änderung der Motordaten für die Ermittlung der aktuellen Drehzahl des Gleichstrommotors berücksichtigt wird.

Die erfindungsgemäße Schaltungsanordnung mit den im Anspruch 3 genannten Merkmalen bietet den Vorteil, dass in einfacher Weise mittels in der Regel vorhandener Steuerungen, vorzugsweise elektronischen Steuergeräten in Kraftfahrzeugen, eine korrekte Ermittlung der aktuellen Drehzahl des Gleichstrommotors möglich ist. Die Schaltungsanordnung zum Ermitteln der Drehzahl eines Gleichstrommotors ist gekennzeichnet durch

   (a) ein Messglied zur Bereitstellung eines der Klemmspannung entsprechenden Messsignals,

   (b) ein Messglied zur Bereitstellung eines dem Ankerstrom entsprechenden Messsignals,

   (c) einen Temperatursensor zur Bereitstellung eines der Ankertemperatur entsprechenden Messsignals und

(d) eine Korrekturschaltung, die so ausgebildet ist, dass ausgehend von den Messsignalen des aktuellen Betriebszustands eine Drehzahl ermittelbar ist, wobei die Temperaturabhängigkeiten der induzierten Ankerspannung und des Ankerwiderstands sowie der Bürstenspannungseffekt des Gleichstrommotors kompensiert sind.

Aufgrund des nunmehr vorliegenden, der aktuellen Drehzahl entsprechenden Signals sind über den Gleichstrommotor aufweisende Stellantriebe sehr genaue Stellvorgänge durchführbar. Aufgrund einer unkorrekten Ermittlung der Drehzahl eintretende Stellabweichungen werden somit vermieden.

Vorteilhafte Ausgestaltungen der Erfindung ergeben sich aus den in den Unteransprüchen genannten Merkmalen.

Zeichnung

Die Erfindung wird nachfolgend in einem Ausführungsbeispiel anhand der zugehörigen Zeichnung, die ein Blockschaltbild zur Ermittlung der Drehzahl eines Gleichstrommotors zeigt, näher erläutert.

Beschreibung des Ausführungsbeispiels

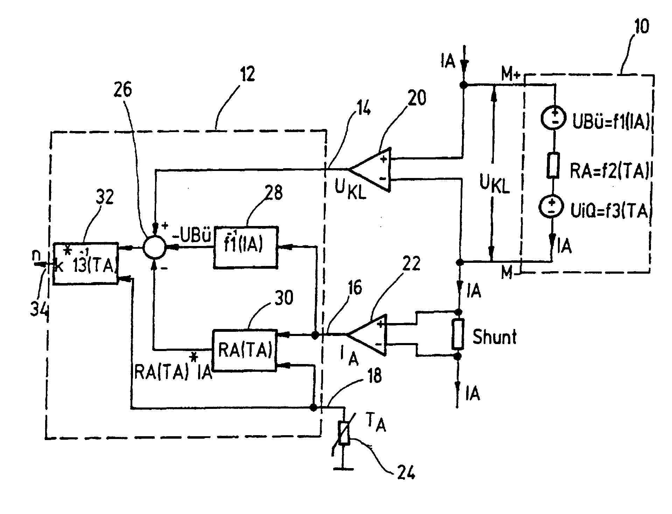

In der Figur ist eine Prinzipschaltung einer Drehzahlerfassung eines Gleichstrommotors gezeigt. Der Gleichstrommotor 10 ist hier mit seinem Ersatzschaltbild dargestellt. Anhand des Ersatzschaltbildes werden wesentliche Motordaten des Gleichstrommotors 10 verdeutlicht. Aufgrund des bekannten Bürstenspannungseffektes ist ein Spannungsabfall $U_{Bü}$ nicht proportional zu einem Ankerstrom $I_A$, so daß sich die Abhängigkeitsfunktion $U_{Bü}=f1(IA)$ ergibt. Weiterhin ist bekannt, daß ein Ankerwiderstand $R_A$ der Ankerwicklung aufgrund des positiven Temperaturkoeffizienten des verwendeten Kupfermaterials temperaturabhängig von der Ankertemperatur $T_A$ ist. Hieraus ergibt sich eine zweite Abhängigkeitsfunktion $R_A = f2(T_A)$. Darüber hinaus ist bekannt, daß die induzierte Ankerspannung (Quellenspannung) $U_{iQ}$ aufgrund der Tatsache, daß der magnetische Fluß des Motors mit einem negativen Temperaturkoeffizienten behaftet ist, ebenfalls temperaturabhängig ist. Hieraus ergibt sich eine dritte Abhängigkeitsfunktion $U_{iQ} = f3(T_A)$. Während des Betriebes des Gleichstrommotors 10 liegt zwischen dessen Motorklemmen M+ und M- die Klemmenspannung $U_{KL}$ an. Gleichzeitig fließt über den Anker der Ankerstrom $I_A$. Die Größe des Ankerstroms $I_A$ wird durch das Widerstandsmoment des Gleichstrommotors bestimmt. Von der elektrischen Seite her wird der Ankerstrom $I_A$ durch die vorzeichenbehaftete Summe von Klemmenspannung $U_{KL}$ und induzierter Spannung $U_{iQ}$ angetrieben. Ändert sich der Ankerstrom $I_A$ mit der Belastung, so weichen die Drehzahl n und die induzierte Ankerspannung $U_{iQ}$ aus, so daß der Strom im stationären Betrieb stets beiden Bedingungen genügt. Hieraus ergibt sich die Beziehung

$$n = k \cdot U_{iQ} = k \cdot (U_{KL} - I_A \cdot R_A).$$

Mit k ist eine Motorkonstante bezeichnet.
Aufgrund schwankender Versorgungsspannung, einer Änderung des Lastmomentes des Gleichstrommotors und einer Änderung der Ankertemperatur kann durch diese Beziehung die Drehzahl n des Gleichstrommotors nicht ausreichend korrekt ermittelt werden.
Um die Abhängigkeit der die Drehzahl n beeinflussenden Motordaten, nämlich des Bürstenspannungsabfalls $U_{Bü}$, des Ankerwiderstandes $R_A$ und der induzierten Ankerspannung $U_{iQ}$ bei einer Änderung des Betriebszustandes zu kompensieren, ist die hier insgesamt mit 12 bezeichnete Korrekturschaltung vorgesehen. Die Korrekturschaltung 12 besitzt einen ersten Eingang 14, einen zweiten Eingang 16 und einen dritten Eingang 18. Der erste Eingang 14 ist mit einem als Operationsverstärker ausgebildeten Meßglied 20 verbunden, das ein der Klemmenspannung $U_{KL}$ entsprechendes Meßsignal bereitstellt. Der zweite Eingang 16 ist mit einem zweiten, ebenfalls als Operationsverstärker ausgebildeten Meßglied 22 verbunden, das ein dem Ankerstrom $I_A$ entsprechendes Meßsignal bereitstellt. Der dritte Eingang 18 ist mit einem Temperatursensor 24 verbunden, der ein der Ankertemperatur $T_A$ entsprechendes Meßsignal bereitstellt. Der Temperatursensor 24 ist hierbei an geeigneter Stelle des Gleichstrommotors 10 installiert, um zumindest näherungsweise ein der tatsächlichen Ankertemperatur $T_A$ entsprechendes Meßsignal an den Eingang 18 zu liefern.
Die Korrekturschaltung 12 weist ein Subtrahierglied 26, ein erstes Funktionsglied 28, ein zweites Funktionsglied 30 sowie ein drittes Funktionsglied 32 auf.
Dem ersten Funktionsglied 28 wird das dem Ankerstrom $I_A$ entsprechende Meßsignal zugeführt und dort eine inverse Funktion des Bürstenspannungseffektes $U_{Bü}$ nachgebildet. Das der inversen Funktion entsprechende Signal wird von dem Funktionsglied 28 dem Subtrahierglied 26 zugeführt und dort von dem der Klemmenspannung $U_{KL}$ entsprechenden Signal subtrahiert.
Dem zweiten Funktionsglied 30 werden die an den Eingängen 16 und 18 dem Ankerstrom $I_A$ und der Ankertemperatur $T_A$ entsprechenden Signale zugeführt. Das Funktionsglied 30 kompensiert hierbei die Temperaturabhängigkeit des Ankerwiderstandes $R_A$ und stellt ein Produkt des kompensierten Ankerwiderstandes $R_A$ mit dem Ankerstrom $I_A$ bereit. Dieses Produkt wird ebenfalls dem Subtrahierglied 26 zugeführt und von dem Signal der Klemmenspannung $U_{KL}$ subtrahiert. Der Differenzwert des Subtrahierglieds 26 und der der Ankertemperatur $T_A$ entsprechende Meßwert werden dem dritten Funktionsglied 32 zugeführt. Dieses kompensiert die Temperaturabhängigkeit der induzierten Spannung $U_{iQ}$ und multipliziert das Ergebnis mit der Motorkonstante k.

An einem Ausgang 34 der Korrekturschaltung 12 liegt somit ein der Drehzahl n entsprechendes Meßsignal an, bei dem die während des Betriebes des Gleichstrommotors 10 aufgrund sich ändernder Betriebszustände ergebenden Ungenauigkeiten kompensiert sind. Das der Drehzahl n entsprechende Meßsignal gibt somit die korrekte aktuelle Drehzahl n des Gleichstrommotors 10 wieder.

## Patentansprüche

1. Verfahren zum Ermitteln der Drehzahl eines Gleichstrommotors, bei dem im aktuellen Betriebszustand des Gleichstrommotors

   (a) ein Messglied (20) ein der Klemmspannung ($U_{KL}$) entsprechendes Messsignal liefert,

   (b) ein Messglied (22) ein dem Ankerstrom ($I_A$) entsprechendes Messsignal liefert,

   (c) ein Temperatursensor (24) ein der Ankertemperatur ($T_A$) entsprechendes Messsignal liefert und

   (d) in einer Korrekturschaltung (12) ausgehend von den Messsignalen des aktuellen Betriebszustands eine Drehzahl ermittelt wird, wobei die Temperaturabhängigkeiten der induzierten Ankerspannung ($U_{iQ}$) und des Ankerwiderstands ($R_A$) sowie der Bürstenspannungseffekt ($U_{Bü}$) des Gleichstrommotors (10) kompensiert werden.

2. Verfahren nach Anspruch 1, **dadurch gekennzeichnet, dass** die inverse Funktion des Bürstenspannungseffekts ($U_{Bü}$) nachgebildet und diese zur Kompensation verwendet wird.

3. Schaltungsanordnung zum Ermitteln der Drehzahl eines Gleichstrommotors, mit

   (a) einem Messglied (20) zur Bereitstellung eines der Klemmspannung ($U_{KL}$) entsprechenden Messsignals,

   (b) einem Messglied (22) zur Bereitstellung eines dem Ankerstrom ($I_A$) entsprechenden Messsignals,

   (c) einem Temperatursensor (24) zur Bereitstellung eines der Ankertemperatur ($T_A$) entsprechenden Messsignals und

   (d) einer Korrekturschaltung (12), die so ausgebildet ist, dass ausgehend von den Messsignalen des aktuellen Betriebszustands eine Drehzahl ermittelbar ist, wobei die Temperaturabhängigkeiten der induzierten Ankerspannung ($U_{iQ}$) und des Ankerwiderstands ($R_A$) sowie der Bürstenspannungseffekt ($U_{Bü}$) des Gleichstrommotors (10) kompensiert sind.

4. Schaltungsanordnung nach Anspruch 3, **dadurch gekennzeichnet, dass** die Korrekturschaltung (12) ein erstes Funktionsglied (28) aufweist, das mit dem ein dem Ankerstrom ($I_A$) entsprechendes Messsignal bereitstellenden Messglied (22) verbunden ist und eine inverse Funktion des Bürstenspannungseffektes ($U_{Bü}$) nachbildet.

5. Schaltungsanordnung nach Anspruch 3 oder 4, **dadurch gekennzeichnet, dass** die Korrekturschaltung (12) ein zweites Funktionsglied (30) aufweist, das mit dem Messglied (22) und dem ein der Ankertemperatur ($T_A$) entsprechendes Messsignal bereitstellenden Temperatursensor (24) verbunden ist und ein Produkt des korrigierten Ankerwiderstandes ($R_A$) und des Ankerstroms ($I_A$) bereitstellt.

6. Schaltungsanordnung nach den Ansprüche 4 oder 5, **dadurch gekennzeichnet, dass** die Korrekturschaltung (12) ein Subtrahierglied (26) aufweist, das mit dem ein der Klemmenspannung ($U_{KL}$) entsprechendes Messsignal bereitstellenden Messglied (20) und den Funktionsgliedern (28, 30) verbunden ist und ein Differenzsignal aus der Klemmenspannung ($U_{KL}$), dem Bürstenspannungseffekt ($U_{Bü}$) und dem Produkt des korrigierten Ankerwiderstandes ($R_A$) und des Ankerstroms ($I_A$) bereitstellt.

7. Schaltungsanordnung nach Anspruch 6, **dadurch gekennzeichnet, dass** die Korrekturschaltung (12) ein drittes Funktionsglied (32) aufweist, das mit dem Ausgang des Subtrahiergliedes (26) und dem Temperatursensor (24) verbunden ist und das die Temperaturabhängigkeit des am Ausgang des Subtrahiergliedes (26) anliegenden, der induzierten Spannung ($U_{iQ}$) entsprechenden Signals korrigiert.

## Claims

1. Method for determining the rotation speed of a DC motor, in which, in the instantaneous operating state of the DC motor,

   (a) a measurement element (20) supplies a measurement signal which corresponds to the terminal voltage ($U_{KL}$),

(b) a measurement element (22) supplies a measurement signal which corresponds to the armature current ($I_A$),

(c) a temperature sensor (24) supplies a measurement signal which corresponds to the armature temperature ($T_A$), and

(d) a rotation speed is determined in a correction circuit (12) on the basis of the measurement signals for the instantaneous operating state, with the temperature relationships between the induced armature voltage ($U_{iQ}$) and the armature resistance ($R_A$) as well as the brush voltage effect ($U_{Bü}$) of the DC motor (10) being compensated for.

2. Method according to Claim 1, **characterized in that** the inverse function of the brush voltage effect ($U_{Bü}$) is modelled and is used for compensation.

3. Circuit arrangement for determining the rotation speed of a DC motor, having

(a) a measurement element (20) for providing a measurement signal which corresponds to the terminal voltage ($U_{KL}$),

(b) a measurement element (22) for providing a measurement signal which corresponds to the armature current ($I_A$),

(c) a temperature sensor (24) for providing a measurement signal which corresponds to the armature temperature ($T_A$), and

(d) a correction circuit (12) which is designed such that a rotation speed can be determined on the basis of measurement signals for the instantaneous operating state, with the temperature relationships between the induced armature voltage ($U_{iQ}$) and the armature resistance ($R_A$) as well as the brush voltage effect ($U_{Bü}$) of the DC motor (10) being compensated for.

4. Circuit arrangement according to Claim 3, **characterized in that** the correction circuit (12) has a first functional element (28), which is connected to the measurement element (22) which provides a measurement signal which corresponds to the armature current ($I_A$), and models an inverse function of the brush voltage effect ($U_{Bü}$).

5. Circuit arrangement according to Claim 3 or 4, **characterized in that** the correction circuit (12) has a second functional element (30), which is connected to the measurement element (22) and to the temperature sensor (24), which provides a measurement signal which corresponds to the armature temperature ($T_A$), and provides a product of the corrected armature resistance ($R_A$) and of the armature current ($I_A$).

6. Circuit arrangement according to Claims 4 or 5, **characterized in that** the correction circuit (12) has a subtraction element (26), which is connected to the functional elements (28, 30) and to the measurement element (20), which provides a measurement signal which corresponds to the terminal voltage ($U_{KL}$), and provides a difference signal from the terminal voltage ($U_{KL}$), the brush voltage effect ($U_{Bü}$) and the product of the corrected armature resistance ($R_A$) and of the armature current ($I_A$).

7. Circuit arrangement according to Claim 6, **characterized in that** the correction circuit (12) has a third functional element (32), which is connected to the output of the subtraction element (26) and to the temperature sensor (24), and which corrects for the temperature dependency of the signal which is produced at the output of the section element (26) and corresponds to the induced voltage ($U_{iQ}$).

## Revendications

1. Procédé pour déterminer la vitesse de rotation d'un moteur à courant continu selon lequel, dans l'état de fonctionnement actuel du moteur à courant continu,

(a) un élément de mesure (20) fournit un signal de mesure correspondant à la tension aux bornes ($U_{KL}$),
(b) un élément de mesure (22) fournit un signal de mesure correspondant au courant d'induit ($I_A$),
(c) un capteur de température (24) fournit un signal de mesure correspondant à la température d'induit ($T_A$) et
(d) dans un circuit de correction (12), partant des signaux de mesure de l'état de fonctionnement actuel, on détermine une vitesse de rotation et on compense les dépendances de température de la tension d'induit induite ($U_{iQ}$) et de la résistance d'induit ($R_A$) ainsi que de l'effet de tension de balai ($U_{Bü}$) du moteur à courant continu (10).

2. Procédé selon la revendication 1, **caractérisé en ce qu'** on forme la fonction inverse de l'effet de tension de balai ($U_{Bü}$) et on utilise cette fonction pour la compensation.

**3.** Circuit pour déterminer la vitesse de rotation d'un moteur à courant continu comprenant

(e) un élément de mesure (20) fournissant un signal de mesure correspondant à la tension aux bornes ($U_{KL}$),
(f) un élément de mesure (22) fournissant un signal de mesure correspondant au courant d'induit ($I_A$),
(g) un capteur de température (24) fournissant un signal de mesure correspondant à la température ($T_A$) de l'induit et
(h) un circuit de correction (12) réalisé pour que partant des signaux de mesure pour l'état de fonctionnement actuel il détermine une vitesse de rotation en compensant les dépendances de température de la tension d'induit induite ($U_{iQ}$) et de la résistance d'induit ($R_A$) ainsi que de l'effet de tension de balai ($U_{Bü}$) du moteur à courant continu (10).

**4.** Circuit selon la revendication 3,
**caractérisé en ce que**
le circuit de correction (12) comporte un premier élément fonctionnel (28) relié à un élément de mesure (22) fournissant un signal de mesure correspondant au courant d'induit ($I_A$) et copiant la fonction inverse de l'effet de tension de balai ($U_{Bü}$).

**5.** Circuit selon la revendication 3 ou 4,
**caractérisé en ce que**
le circuit de correction (12) comporte un premier élément fonctionnel (30) relié à l'élément de mesure (22) et au capteur de température (24) fournissant un signal de mesure correspondant à la température d'induit ($T_A$) et donnant le produit de la résistance d'induit ($R_A$), corrigée et du courant d'induit ($I_A$).

**6.** Circuit selon les revendications 4 ou 5,
**caractérisé en ce que**
le circuit de correction (12) comporte un soustracteur (26) relié à un élément de mesure (20) fournissant un signal de mesure correspondant à la tension ou aux bornes ($U_{KL}$) et aux éléments fonctionnels (28, 30), et fournissant un signal de différence à partir de la tension aux bornes ($U_{KL}$), de l'effet de tension de balai ($U_{Bü}$) et du produit de la résistance d'induit ($R_A$), corrigé et du courant d'induit ($I_A$).

**7.** Circuit selon la revendication 6.
**caractérisé en ce que**
le circuit de correction (12) comporte un troisième élément fonctionnel (32) relié à la sortie du soustracteur (26) et du capteur de température (24) et qui corrige la relation de température du signal correspondent à la tension induite ($U_{iQ}$), appliqué à la sortie du soustracteur (26).